# DEMANDE DE BREVET EUROPEEN

(11) **EP 1 489 558 A2**
(43) Date de publication de la demande: **22.12.2004**
(21) Numéro de dépôt: 04291469.7
(22) Date de dépôt: 11.06.2004
(51) Int. Cl.: G06T 7/00

(54) **Procédé permettant de comparer les aspects d'une région du corps humain à au moins deux instants différents**

(30) Priorité: 13.06.2003 FR 0307172
(71) Demandeur: L'OREAL, 75008 Paris (FR)
(72) Inventeur: Giron, Franck, 77164 Ferrieres-en-Brie (FR)
(74) Mandataire: Tanty, François

(57) **Abrégé**

La présente invention concerne un procédé permettant de comparer les aspects d'une région du corps humain à au moins deux instants différents, comportant l'étape suivante :
- générer au moins deux images 3D (F₁, F₂) de ladite région, ces images 3D étant obtenues en transformant en une altitude des niveaux de gris de deux images 2D de ladite région, prises respectivement auxdits instants.

## Description

La présente invention concerne un procédé pour mettre en évidence, entre autres, l'effet sur une région du corps humain de l'application d'un produit, notamment l'effet optique induit par la présence du produit.

Il existe des rouges à lèvres qui permettent de faire apparaître les lèvres plus « pulpeuses ». Il existe également des vernis à ongles qui donnent un effet de volume aux ongles. Par ailleurs, le maquillage clair/obscur est souvent utilisé pour modeler le visage.

Il est toutefois difficile de quantifier l'impression de volume conférée par le maquillage.

L'invention vise notamment à faciliter la mesure de l'effet optique obtenu par un maquillage.

L'invention a ainsi pour objet, selon un premier de ses aspects, un procédé permettant de comparer les aspects d'une région du corps humain à au moins deux instants différents, comportant l'étape suivante :
- générer au moins deux images 3D de ladite région, ces images 3D étant obtenues en transformant en une altitude des niveaux de gris d'au moins deux images 2D de ladite région, prises respectivement auxdits instants.

Par « deux instants différents », on désigne selon l'invention deux dates d'acquisition d'images 2D. Ces deux dates peuvent différer par exemple de quelques secondes ou minutes, le temps par exemple d'appliquer un produit, notamment de maquillage, sur la région du corps considérée, ou différer d'une durée plus grande, par exemple de quelques jours, semaines ou mois, dans le cas par exemple où l'on souhaite mettre en évidence les effets d'un traitement par un produit de soin, notamment un antirides.

Une « image 2D » est une image en deux dimensions d'une région du corps. Chaque pixel de l'image 2D est associé à deux coordonnées permettant de le localiser sur l'image 2D et à un niveau de gris. Un niveau de gris 0 correspond par exemple à du noir sur l'image et un niveau de gris maximal, par exemple égal à 255 dans le cas d'un codage sur 8 bits, à du blanc, les niveaux de gris intermédiaires entre ces valeurs extrêmes correspondant respectivement aux diverses nuances de luminosité intermédiaires.

L'image 2D peut être une image en couleurs ou en noir et blanc. Dans le cas d'une image en couleurs, un niveau de gris peut être la valeur de l'une des composantes trichromatiques du signal, par exemple l'une des valeurs R, G, B, ou une valeur correspondant par exemple à un niveau de gris moyen du pixel, ce niveau de gris moyen pouvant être obtenu par exemple en moyennant les niveaux R, G, B.

Une « image 3D » est une image en trois dimensions qui peut être générée à partir d'une seule image 2D en transformant en altitude chaque niveau de gris de l'image 2D. Chaque point de l'image 3D aura alors trois coordonnées permettant de le situer dans l'espace. Sur une telle image 3D, un relief accidenté peut traduire une variation de luminosité importante, qui pourra correspondre à une impression de volume accrue conférée par le maquillage. Au contraire, un relief sensiblement plat pourra traduire un maquillage plus uniforme, avec peu de variations de luminosité.

L'image 3D permet la mesure d'une impression visuelle, d'un effet de leurre ou de trompe-l'oeil apporté par le maquillage. L'image 3D ne représente pas le relief réel mais traduit l'illusion d'optique induite par le maquillage. Les rugosités, collines et vallées matérialisées par le relief de l'image 3D sont virtuelles.

On peut effectuer un traitement topographique de l'une au moins des images 3D.

On peut notamment utiliser au moins un logiciel de traitement de la topographie comme si le relief de l'image 3D générée par le procédé selon l'invention était réel.

Le traitement topographique peut par exemple permettre de déterminer une rugosité, une altitude de vallée ou de colline, entre autres.

Par « image », on désigne tout ensemble de pixels contenant une information sur l'aspect de la région du corps humain étudiée. L'image 2D peut être apparente et être visualisée, par exemple par l'utilisateur, au moyen notamment d'un écran d'ordinateur ou d'un support papier. L'image 2D peut en variante ne pas être apparente et se présenter par exemple sous forme de fichier informatique. Dans ce cas, seule l'image 3D peut être rendue apparente, le cas échéant, pour permettre sa comparaison à une autre image 3D. Une image 2D peut correspondre à une fraction seulement d'une image plus grande préalablement acquise. Une image 3D peut être affichée en deux dimensions, en perspective ou non. Seule une coupe de l'image 3D peut encore être affichée, le cas échéant.

Le procédé selon l'invention peut être mis en oeuvre avec des images 2D déjà acquises ou le procédé peut comporter en outre l'étape consistant à acquérir les images 2D de la région concernée. Les images 2D peuvent être des photographies scannées, par exemple.

Les images 2D sont de préférence acquises dans les mêmes conditions d'environnement, notamment dans les mêmes conditions d'illumination, par exemple sous un éclairage en lumière diffuse.

Les images 2D peuvent être acquises au moyen d'un capteur optique ou non optique. Un capteur optique peut être par exemple une caméra analogique ou numérique, y compris un appareil photographique. Un capteur non optique peut être un capteur comportant un réseau de cellules de détection non optiques, par exemple capacitives, thermiques ou autres. Le niveau de gris de chaque pixel de l'image 2D peut être représentatif de la capacitance mesurée par une cellule de détection associée.

Le procédé peut comporter en outre l'étape consistant à détourer sur les images 2D la région du corps humain étudiée. Par exemple, dans le cas des lèvres, on peut sélectionner uniquement les lèvres à partir d'une image du bas du visage. Cela peut faciliter la comparaison entre deux images, les images 3D ne correspondant qu'à la région détourée, les lèvres par exemple.

Le procédé peut également comporter l'étape consistant à traiter deux images 2D de telle sorte que ces images 2D aient le même niveau de gris moyen, avant de générer les images 3D correspondantes. Cela peut faciliter la comparaison de deux images.

Le procédé comporte avantageusement l'étape consistant à permettre de comparer les images 3D générées, et notamment permettre de comparer les variations des altitudes des images 3D.

Le procédé peut notamment comporter l'étape consistant à afficher les images 3D pour permettre leur comparaison visuelle. Les images 3D peuvent être affichées simultanément, juxtaposées ou superposées, sur un écran ou imprimées sur un support papier, par exemple.

Les deux images 2D peuvent être acquises respectivement avant et après application d'un produit sur la région étudiée, par exemple un produit de maquillage tel qu'un rouge à lèvres.

Un avantage de la présente invention est de permettre de mettre en évidence l'effet du produit sur l'aspect de la région étudiée en comparant l'image 3D de la région nue à celle de la région après application du produit.

En variante, les deux images 2D peuvent être des images de la région étudiée après application respectivement d'un premier et d'un deuxième produits différents. Le procédé permet, dans ce cas, de mettre en évidence des différences d'aspect selon que c'est le premier ou le deuxième produit qui est appliqué. Ces premier et deuxième produits peuvent contenir par exemple un ou plusieurs composants de natures différentes et/ou ayant des concentrations différentes.

Le ou les produits appliqués peuvent être des produits de maquillage, par exemple des rouges à lèvres ou des brillants à lèvres, des fonds de teint, des vernis à ongles ou des produits de soin, par exemple des produits permettant de traiter ou d'estomper un défaut de la peau, par exemple une ride, notamment une ride de la patte d'oie ou de la glabelle, une rougeur ou une cicatrice.

La région du corps humain étudiée peut être une région de peau, par exemple celle du visage, de muqueuses, notamment les lèvres, ou de phanères, par exemple les ongles.

Le procédé selon l'invention peut être mis en oeuvre sur un lieu de vente, dans un institut de beauté, ou au domicile d'une personne, par exemple.

Il peut être utilisé pour mettre en valeur l'effet d'un traitement sur un défaut de la peau, une ride par exemple. Le procédé peut être mis en oeuvre plusieurs fois pour suivre l'évolution de l'aspect d'une ride au cours d'un traitement de longue durée.

L'invention a encore pour objet, selon un autre de ses aspects, un procédé pour mettre en évidence l'effet volumateur d'un rouge à lèvres ou d'un brillant à lèvres, comportant les étapes suivantes :
- acquérir deux images 2D des lèvres respectivement avant et après application sur les lèvres du rouge à lèvres ou du brillant à lèvres,
- générer au moins deux images 3D des lèvres, ces images 3D étant obtenues en transformant en une altitude des niveaux de gris des deux images 2D,
- permettre de comparer les images 3D, notamment les altitudes des images 3D.

L'invention a encore pour objet, selon un autre de ses aspects, un procédé pour mettre en évidence l'effet visuel d'un produit appliqué sur la peau ou les ongles, comportant les étapes suivantes :
- acquérir deux images 2D des ongles ou de la peau respectivement avant et après application du produit,
- générer au moins deux images 3D des lèvres, ces images 3D étant obtenues en transformant en une altitude des niveaux de gris des deux images 2D,
- permettre de comparer les images 3D, notamment les altitudes des images 3D.

L'invention a encore pour objet, selon un autre de ses aspects, un procédé pour mettre en évidence l'atténuation de la visibilité d'un défaut de la peau, notamment une ride, comportant les étapes suivantes :
- acquérir deux images 2D respectivement avant et après application d'un produit sur le défaut de la peau,
- générer au moins deux images 3D du défaut de la peau, ces images 3D étant obtenues en transformant en une altitude des niveaux de gris des deux images 2D,
- permettre de comparer les images 3D.

Le produit appliqué peut être par exemple un produit de maquillage ou de soin.

L'invention a encore pour objet, selon un autre de ses aspects, un procédé pour traiter un défaut de la peau, par exemple une ride, avec un produit, notamment cosmétique, comportant les étapes suivantes :
- acquérir une image 2D du défaut de la peau avant traitement,
- traiter avec le produit le défaut de la peau,
- acquérir une image 2D du défaut de la peau après traitement,
- permettre la comparaison de deux images 3D du défaut de la peau, ces images 3D étant obtenues en transformant en une altitude des niveaux de gris des deux images 2D.

L'invention a encore pour objet, selon un autre de ses aspects, un procédé permettant de comparer les aspects de deux régions différentes du corps humain, comportant les étapes suivantes :
- acquérir une image 2D d'une première région,
- appliquer un produit sur une deuxième région,
- acquérir une image 2D de la deuxième région,
- permettre la comparaison de deux images 3D des deux régions, ces deux images 3D étant obtenues en transformant en une altitude des niveaux de gris des deux images 2D.

Les deux régions du corps humain sont par exemple deux moitiés de lèvres. On peut appliquer par exemple un rouge à lèvres sur une moitié des lèvres, par exemple la lèvre supérieure, et l'on peut comparer, avec le procédé défini ci-dessus, les aspects respectivement de la moitié de lèvres nues, par exemple la lèvre inférieure, et de la lèvre maquillée.

L'invention a encore pour objet, selon un autre de ses aspects, un procédé pour comparer les aspects d'une région du corps humain d'au moins deux personnes, comportant les étapes suivantes :
- acquérir une image 2D de la région considéré de chaque personne,
- permettre la comparaison d'au moins deux images 3D obtenues en transformant en une altitude des niveaux de gris des images 2D.

Le procédé peut comporter en outre l'étape consistant à appliquer un produit sur la région considérée d'au moins une personne avant l'acquisition de l'image 2D correspondante.

L'invention a encore pour objet, selon un autre de ses aspects, un kit de maquillage ou de soin d'une région du corps humain, comportant :
- un produit de maquillage ou de soin, et
- au moins une image 3D générée par un procédé tel que défini plus haut, notamment deux images permettant de mettre en évidence un effet du produit.

La ou les images 3D peuvent être par exemple imprimées sur l'emballage du produit ou sur une notice accompagnant le produit.

La ou les images 3D peuvent encore figurer sur un panneau publicitaire, ou être diffusées par voie hertzienne, par satellite, fibre optique ou par réseau filaire, en vue de l'affichage sur un écran de télévision, un terminal portable ou un ordinateur.

L'invention a encore pour objet, selon un autre de ses aspects, un serveur d'hébergement d'un site informatique, notamment un site Internet, agencé d'une part pour recevoir et mémoriser au moins deux images 2D d'une région du corps humain, prises respectivement à deux instants différents et envoyées au moyen d'un réseau, notamment Internet, et agencé d'autre part pour générer au moins deux images 3D de ladite région à partir des deux images 2D, ces images 3D étant obtenues en transformant en une altitude des niveaux de gris des deux images 2D.

Le site peut être en outre agencé pour afficher les images 3D et permettre la comparaison d'altitudes des images 3D.

Le site peut encore être agencé pour effectuer des calculs de topographie à partir des images 3D, par exemple déterminer une rugosité ou des altitudes de collines ou vallées.

Le site peut par exemple être agencé pour transformer les variations d'altitude d'une image 3D en un indice représentatif d'un effet volumateur ou de l'atténuation d'une ride par exemple.

Le site peut également être agencé pour prescrire un produit de camouflage ou de traitement d'un défaut de la peau, le cas échéant.

Les images 2D peuvent être acquises à l'aide d'une « webcam » ou d'un scanner, par exemple au domicile de l'utilisateur, et envoyées au site qui est agencé pour les recevoir et les mémoriser.

Le site peut également être agencé pour détourer les images 2D afin d'en extraire une région, les lèvres par exemple, et pour associer à chaque pixel un niveau de gris.

L'invention a encore pour objet, selon un autre de ses aspects, une méthode pour promouvoir la vente d'un produit, notamment cosmétique, y compris de soin, comportant l'étape consistant à faire état d'une efficacité du produit constatée au moyen d'un procédé tel que défini plus haut, voire à permettre la visualisation d'au moins une image 3D relative à un résultat obtenu grâce au produit.

Une telle promotion du produit pourra se faire par n'importe quel canal de communication. Elle pourra être faite notamment par un vendeur, directement sur un point de vente, par la radio, la télévision ou le téléphone, notamment dans le cadre de spots publicitaires ou de messages courts. Elle pourra être faite également par le canal de la presse écrite ou par le biais de tout autre document, en particulier à des fins publicitaires. Elle pourra se faire également par Internet, par tout autre réseau informatique adéquat ou par un réseau de téléphonie mobile. Elle pourra être faite également directement sur le produit, notamment sur son packaging ou sur toute notice explicative qui lui est associée.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de manière schématique un exemple de dispositif permettant de mettre en oeuvre le procédé selon l'invention,
- la figure 2 représente deux photographies de lèvres respectivement non maquillées et maquillées,
- la figure 3 représente les lèvres de la figure 2 que l'on a détourées,
- la figure 4 représente les lèvres des figures 2 et 3 dont on a transformé chaque pixel en niveau de gris,
- la figure 5 représente des images 3D générées à partir des images 2D de la figure 4,
- la figure 6 représente de manière schématique un autre exemple de dispositif permettant de mettre en oeuvre le procédé selon l'invention,
- la figure 7 est un schéma en blocs illustrant un procédé selon l'invention, et
- la figure 8 représente de manière schématique et partielle un kit selon l'invention.

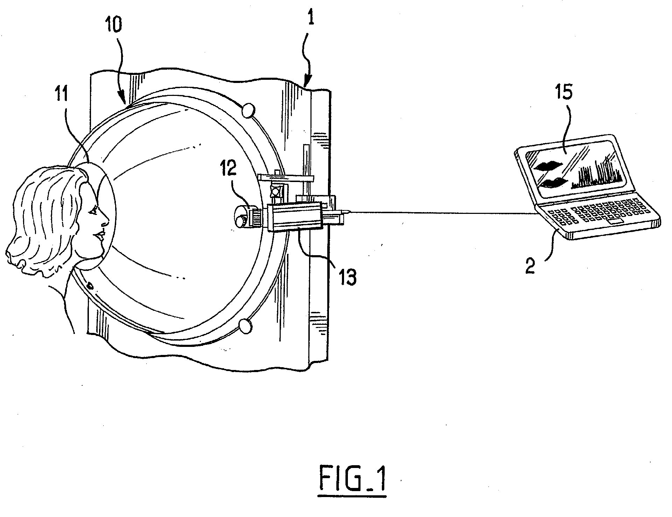

On a représenté à la figure 1 un exemple de dispositif permettant de mettre en oeuvre l'invention. Ce dispositif comporte un moyen d'acquisition 1 permettant d'acquérir, dans l'exemple illustré, au moins deux images 2D des lèvres d'une personne respectivement à deux instants t₁ et t₂ différents, avant et après l'application d'un rouge à lèvres.

Le dispositif de la figure 1 comporte également des moyens de traitement des images 2D acquises par le moyen d'acquisition 1, ces moyens de traitement comportant par exemple un micro-ordinateur 2 conventionnel. Bien entendu, le micro-ordinateur 2 n'est qu'un exemple parmi d'autres de moyens de traitement pouvant être utilisés, ce micro-ordinateur 2 pouvant être remplacé par exemple par un terminal portable, notamment un téléphone mobile ou un assistant personnel numérique.

Le moyen d'acquisition 1 peut comporter par exemple une enceinte 10 sensiblement sphérique, pourvue d'une ouverture 11 permettant à l'utilisateur d'entrer la tête ou une partie du corps.

L'enceinte 10 est équipée d'une ou plusieurs sources de lumière qui peuvent être des sources de lumière continues ou pulsées, par exemple de type lampe flash, polarisées ou non.

La lumière à l'intérieur de l'enceinte 10 peut le cas échéant être une lumière diffuse permettant d'acquérir des images sans brillance. L'enceinte 10 est pourvue dans l'exemple considéré d'une ou plusieurs petites ouvertures latérales ou frontales 12 associées à une ou plusieurs caméras latérales ou frontales 13 permettant d'acquérir des images 2D d'une partie du visage de la personne ayant positionné son visage dans l'ouverture 11 de la sphère.

Des moyens de positionnement non représentés peuvent être agencés dans le dispositif 1 afin de faciliter le positionnement du visage dans l'ouverture 11 et de permettre l'acquisition de deux images 2D dans les mêmes conditions.

D'autres moyens d'acquisition optiques peuvent être utilisés, par exemple une « webcam », un appareil photographique numérique, un scanner.

On peut encore utiliser, pour acquérir des images 2D, un capteur non optique, par exemple un capteur commercialisé sous la marque TOUCHCHIP® par la société ST-MICROELECTRONICS. Un tel capteur comporte un réseau de cellules de détection de la capacitance de la peau.

Le micro-ordinateur 2 comporte des moyens d'affichage, notamment un écran 15, permettant d'afficher chaque image 2D acquise par le dispositif 1, notamment acquise par une seule caméra disposée au fond de l'enceinte 10, à l'opposé de l'ouverture 11.

Le dispositif de la figure 1 peut être utilisé comme suit.

La personne avance son visage dans l'ouverture 11, ce qui permet au dispositif 1 d'acquérir une première image I₁ des lèvres à un premier instant t₁.

Cette image en deux dimensions est mémorisée par le micro-ordinateur 2.

Un produit de maquillage, notamment un rouge à lèvres, est alors appliqué sur les lèvres de la personne.

Celle-ci place une deuxième fois son visage dans l'ouverture 11 et une nouvelle image I₂ des lèvres maquillées est acquise à un deuxième instant t₂, et mémorisée dans le micro-ordinateur 2.

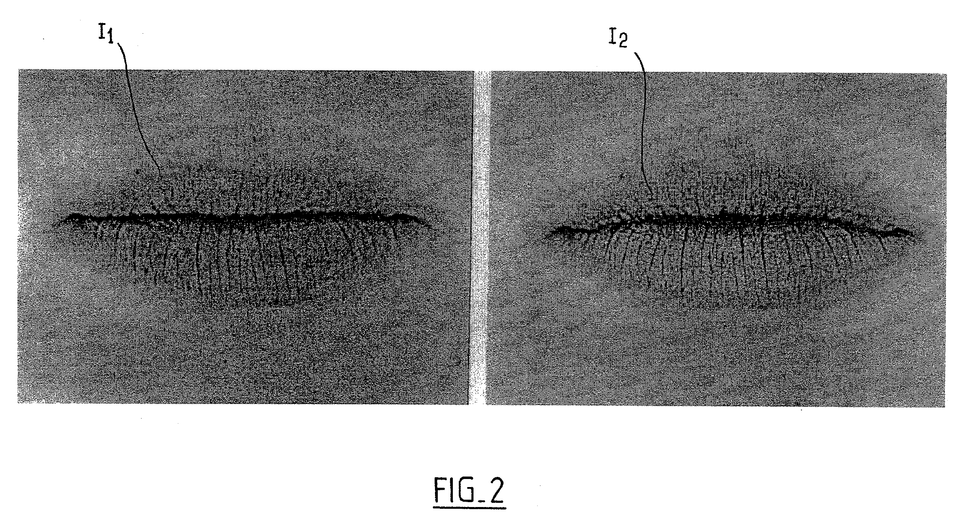

Des exemples d'images I₁ et I₂ acquises sont représentés à la figure 2. Ces images sont 2D.

Le micro-ordinateur 2 comporte des moyens permettant de détourer les lèvres des images I₁ et I₂ acquises, par exemple un logiciel d'analyse d'images du type de OPTIMAS ou PHOTOSHOP.

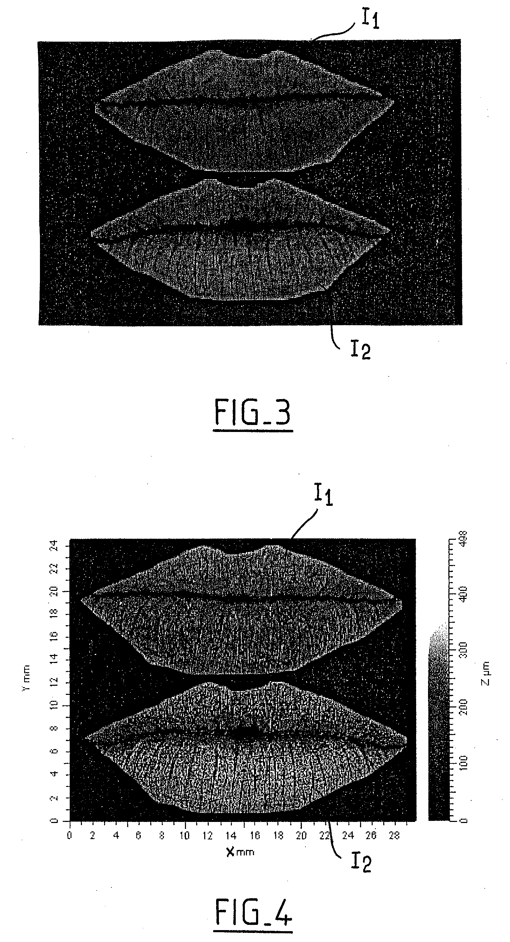

La figure 3 représente les images I₁ et I₂ des lèvres respectivement nues et maquillées, après détourage.

Sur la figure 4, on a fait apparaître également une échelle de niveaux de gris.

Chaque pixel de chaque image 2D peut être localisé sur l'image par une abscisse x et une ordonnée y. Ce pixel a également un niveau de gris z, qui peut être compris par exemple entre 0 et 255. Les niveaux de gris des images I₁ et I₂ peuvent être ajustés de manière à ce que chaque image ait le même niveau de gris moyen.

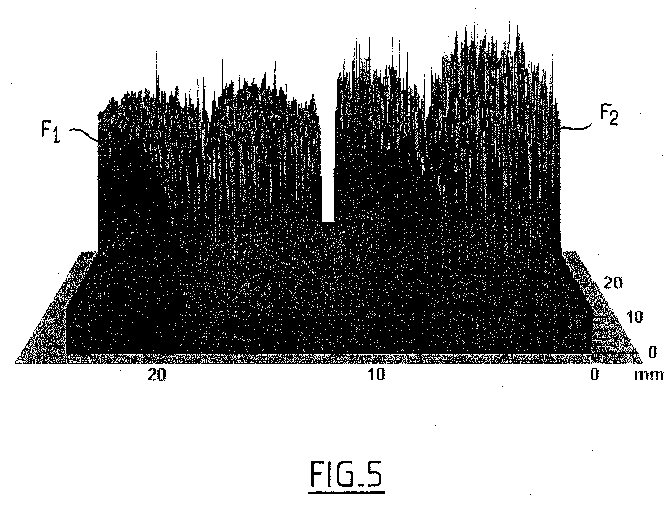

Le micro-ordinateur 2 est agencé pour transformer en une altitude les niveaux de gris z, ce qui permet d'obtenir deux images F₁ et F₂ dites 3D dont chaque pixel a des coordonnées (x, y, z), ainsi qu'illustré sur la figure 5. Les images F₁ et F₂ peuvent être générées par le logiciel TOPOSURF ou OptiCAD® par exemple. Les images I₁ et I₂ auront dans ce cas été enregistrées au préalable sous forme d'un fichier de format lisible par TOPOSURF. Tout ou partie d'une image 3D ainsi obtenue peut être visualisée, par exemple par affichage sur un écran ou impression. On peut notamment n'afficher qu'une tranche dans le plan (z, y) ou (y, z) de l'image, voire qu'un tronçon de l'image pour une plage de valeurs de x ou de y.

Le micro-ordinateur 2 est de préférence, comme illustré, agencé pour afficher côte-à-côte les images F₁ et F₂ générées, ce qui facilite leur comparaison et la perception de l'effet volumateur d'un rouge à lèvres, par exemple.

On peut remarquer sur la figure 5 que le relief de l'image de gauche correspondant aux lèvres nues est moins accidenté que celui de l'image de droite correspondant aux lèvres maquillées. Les zones claires des lèvres ont une altitude plus élevée que les zones sombres. Plus le relief est accidenté, plus le contraste entre les zones claires et sombres est grand, et plus l'effet de volume est important.

L'effet volumateur obtenu sur les lèvres peut être lié par exemple à la formulation du rouge à lèvres, lequel peut comporter par exemple au moins un agent de coloration goniochromatique.

Le dispositif 1 et le micro-ordinateur 2 peuvent être présents sur un lieu de vente ou dans un institut de beauté.

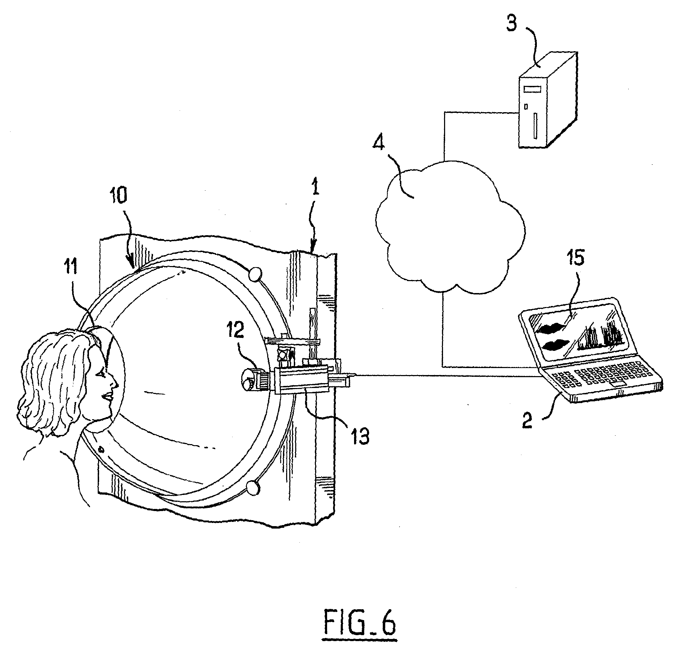

Le micro-ordinateur 2 peut être relié à un serveur informatique 3 distant au moyen d'un réseau 4 de type Internet ou Intranet par exemple, comme illustré à la figure 6.

Le micro-ordinateur 2 peut alors être agencé uniquement pour recevoir et mémoriser les images 2D acquises par le moyen d'acquisition 1, et pour les envoyer au serveur 3, lequel est agencé pour recevoir les images 2D et les traiter.

Le serveur 3 peut être agencé pour générer les images 3D à partir des images 2D et envoyer au micro-ordinateur 2 les images 3D ainsi générées, afin qu'un utilisateur puisse visualiser sur l'écran 15 l'effet volumateur d'un rouge à lèvres, par exemple.

Le serveur 3 peut être agencé pour générer pour chaque image 3D un indice lié aux variations d'altitude de cette image, afin d'en faciliter la comparaison, par exemple.

Les images 3D peuvent être imprimées sur une feuille, affichées sur l'écran 15 ou le cas échéant affichées en relief par tout moyen conventionnel, comportant par exemple un obturateur à cristaux liquides ou des lunettes à verres colorés.

Le procédé selon l'invention peut être également mis en oeuvre pour mettre en évidence l'effet d'atténuation de la visibilité d'un défaut de la peau, notamment d'une ride, par exemple de la patte d'oie.

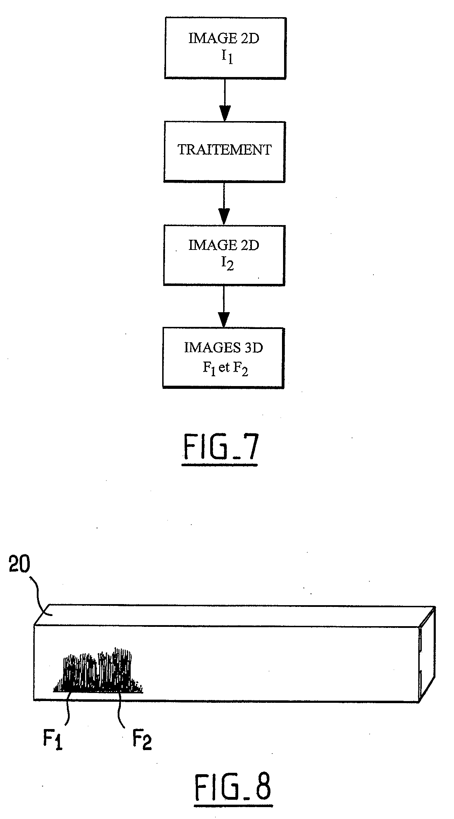

Le procédé peut comporter, comme illustré sur la figure 7, une première étape 30 consistant à acquérir une image I₁ d'un défaut de la région de peau concernée, par exemple à l'aide du moyen d'acquisition 1 de la figure 1.

Ensuite, un traitement peut être effectué dans une deuxième étape 31 à l'aide d'un produit de soin, éventuellement prescrit par le micro-ordinateur 2 ou le serveur 3.

Après ou au cours du traitement, on peut acquérir à une troisième étape 32, une image I₂ de la même région de peau dans les mêmes conditions. Les deux images I₁ et I₂ acquises sont des images 2D et peuvent être transformées à l'étape 33 en images F₁ et F₂ qui sont des images 3D, ainsi que décrit plus haut, ce qui permet de comparer les reliefs des deux images 3D et de mettre en évidence l'effet d'atténuation des rides après le traitement. Le relief de l'image F₁ avant traitement pourra être plus accidenté que le relief de l'image F₂ après traitement.

Bien entendu, l'invention n'est pas limitée aux exemples de réalisation qui viennent d'être donnés. La région du corps humain concernée peut être toute partie du visage, des cheveux, du corps, des muqueuses ou des ongles.

On peut faire apparaître des images 3D sur l'emballage 20 d'un produit correspondant, comme illustré sur la figure 8, le produit étant par exemple un rouge à lèvres ou un brillant à lèvres. Les deux images 3D apparaissant sur l'emballage peuvent correspondre par exemple à des lèvres nues et à des lèvres maquillées.

Le produit peut encore être un produit de soin, et les images 3D être liées respectivement à des images obtenues avant et après traitement.

Dans toute la description, y compris les revendications, l'expression « comportant un » doit être comprise comme étant synonyme de « comportant au moins un », sauf si le contraire est spécifié.

## Revendications

1. Procédé permettant de comparer les aspects d'une région du corps humain à au moins deux instants (t₁, t₂) différents, comportant l'étape suivante :
- générer au moins deux images 3D (F₁, F₂) de ladite région, ces images 3D étant obtenues en transformant en une altitude des niveaux de gris de deux images 2D (I₁, I₂) de ladite région, prises respectivement auxdits instants (t₁, t₂).

2. Procédé selon la revendication 1, **caractérisé par le fait qu'**il comporte en outre l'étape consistant à acquérir les deux images 2D (I₁, I₂) de ladite région.

3. Procédé selon la revendication précédente, **caractérisé par le fait que** les deux images 2D (I₁, I₂) sont acquises dans les mêmes conditions d'environnement, notamment dans les mêmes conditions d'illumination.

4. Procédé selon la revendication précédente, **caractérisé par le fait que** les images 2D (I₁, I₂) sont acquises sous un éclairage en lumière diffuse.

5. Procédé selon l'une quelconque des revendications 2 à 4, **caractérisé par le fait que** les deux images 2D (I₁, I₂) sont acquises au moyen d'un capteur non optique.

6. Procédé selon l'une quelconque des revendications 2 à 4, **caractérisé par le fait que** les deux images 2D (I₁, I₂) sont acquises au moyen d'une caméra (13) analogique ou numérique.

7. Procédé selon l'une quelconque des revendications précédentes, **caractérisé par le fait qu'**il comporte en outre l'étape consistant à détourer sur les deux images 2D (I₁, I₂) ladite région.

8. Procédé selon l'une quelconque des revendications précédentes, **caractérisé par le fait qu'**il comporte l'étape consistant à traiter les deux images 2D (I₁, I₂) de telle sorte que ces images 2D aient le même niveau de gris moyen.

9. Procédé selon l'une quelconque des revendications précédentes, **caractérisé par le fait qu'**il comporte en outre l'étape consistant à afficher les deux images 3D (F₁, F₂).

10. Procédé selon l'une quelconque des revendications précédentes, **caractérisé par le fait qu'**il comporte en outre l'étape consistant à permettre de comparer les deux images 3D (F₁, F₂).

11. Procédé selon l'une quelconque des revendications précédentes, **caractérisé par le fait que** les images 3D ne représentent pas un relief réel.

12. Procédé selon l'une quelconque des revendications précédentes, **caractérisé par le fait que** les deux images 2D (I₁, I₂) sont acquises respectivement avant et après application sur ladite région d'un produit.

13. Procédé selon l'une quelconque des revendications 1 à 11, **caractérisé par le fait que** les deux images 2D (I₁, I₂) sont des images de ladite région après application respectivement d'un premier et d'un deuxième produits différents.

14. Procédé selon l'une des deux revendications immédiatement précédentes, **caractérisé par le fait que** le ou les produits appliqués sont des produits de maquillage.

15. Procédé selon la revendication précédente, **caractérisé par le fait que** le ou les produits de maquillage sont des rouges à lèvres ou des brillants à lèvres.

16. Procédé selon l'une des revendications 12 et 13, **caractérisé par le fait que** le ou les produits appliqués sont des produits de soin.

17. Procédé selon l'une quelconque des revendications précédentes, **caractérisé par le fait que** ladite région est une région de peau, notamment celle du visage, de muqueuses, notamment les lèvres, ou de phanères, notamment les ongles.

18. Procédé selon l'une quelconque des revendications précédentes, **caractérisé par le fait que** l'on effectue un traitement topographique de l'une au moins des images 3D.

19. Procédé pour mettre en évidence l'effet volumateur d'un rouge à lèvres ou d'un brillant à lèvres, **caractérisé par le fait qu'**il comporte les étapes suivantes :
- acquérir deux images 2D (I₁, I₂) des lèvres respectivement avant et après application sur les lèvres du rouge à lèvres ou du brillant à lèvres,
- générer au moins deux images 3D des lèvres, ces images 3D étant obtenues en transformant en une altitude des niveaux de gris des deux images 2D,
- permettre de comparer les images 3D (F₁, F₂).

20. Procédé pour mettre en évidence l'effet visuel d'un produit appliqué sur la peau ou les ongles, comportant les étapes suivantes :
- acquérir deux images 2D des ongles ou de la peau respectivement avant et après application du produit,
- générer au moins deux images 3D des lèvres, ces images 3D étant obtenues en transformant en une altitude des niveaux de gris des deux images 2D,
- permettre de comparer les images 3D, notamment les altitudes des images 3D.

21. Procédé pour mettre en évidence l'atténuation de la visibilité d'un défaut de la peau, notamment une ride, comportant les étapes suivantes :
- acquérir deux images 2D (I₁, I₂) respectivement avant et après application d'un produit sur le défaut de la peau,
- générer au moins deux images 3D (F₁, F₂) du défaut de la peau, ces images 3D étant obtenues en transformant en une altitude des niveaux de gris des deux images 2D,
- permettre de comparer les images 3D (F₁, F₂).

22. Procédé pour traiter un défaut de la peau, notamment une ride, avec un produit cosmétique, comportant les étapes suivantes :
- acquérir une image 2D du défaut de la peau avant traitement,
- traiter avec le produit le défaut de la peau,
- acquérir une image 2D du défaut de la peau après traitement,
- permettre la comparaison de deux images 3D du défaut de la peau, ces images 3D étant obtenues en transformant en une altitude des niveaux de gris des deux images 2D.

23. Procédé permettant de comparer les aspects de deux régions différentes du corps humain, **caractérisé par le fait qu'**il comporte les étapes suivantes :
- acquérir une image 2D d'une première région,
- appliquer un produit sur une deuxième région,
- acquérir une image 2D de la deuxième région,
- permettre la comparaison de deux images 3D des deux régions, ces deux images 3D étant obtenues en transformant en une altitude des niveaux de gris des deux images 2D.

24. Procédé permettant de comparer les aspects d'une région du corps humain d'au moins deux personnes, **caractérisé par le fait qu'**il comporte les étapes suivantes :
- acquérir une image 2D de la région considérée pour chaque personne,
- permettre la comparaison d'au moins deux images 3D obtenues en transformant en une altitude des niveaux de gris des images 2D.

25. Kit de maquillage ou de soin d'une région du corps humain, **caractérisé par le fait qu'**il comporte :
- un produit de soin ou de maquillage, et
- au moins une image 3D (F₁ et F₂) générée par un procédé tel que défini dans l'une quelconque des revendications 1 à 18, notamment deux images 3D permettant de mettre en évidence un effet du produit.

26. Serveur d'hébergement d'un site informatique, notamment site Internet, agencé pour comparer les aspects d'une région du corps humain à au moins deux instants différents, ce serveur comportant des moyens :
- pour recevoir et mémoriser au moins deux images 2D de ladite région prises respectivement auxdits instants et envoyées au moyen d'un réseau, notamment Internet, et
- pour générer au moins deux images 3D de ladite région à partir des deux images 2D, ces images 3D étant obtenues en transformant en une altitude des niveaux de gris des deux images 2D.
